# EUROPEAN PATENT APPLICATION

(11) **EP 4 819 340 A1**
(43) Date of publication of application: **07.10.2026**
(21) Application number: 23960465.5
(22) Date of filing: 05.12.2023
(51) Int. Cl.: H01M 50/30

(54) **BATTERY CELL AND PREPARATION METHOD THEREFOR, BATTERY, AND ELECTRIC DEVICE**

(71) Applicant: Contemporary Amperex Technology Co., Limited, Ningde, Fujian 352100 (CN)
(72) Inventor: SUN, Jingxuan, Ningde, Fujian 352100 (CN); XING, Chengyou, Ningde, Fujian 352100 (CN); OUYANG, Shaocong, Ningde, Fujian 352100 (CN); YE, Yonghuang, Ningde, Fujian 352100 (CN)
(74) Representative: Kraus & Lederer PartGmbB
(86) International application number: PCT/CN2023/136543
(87) International publication number: WO 2025/118151

(57) **Abstract**

The present application provides a battery cell and a preparation method therefor, a battery, and an electric device. The battery cell comprises: an electrode assembly and an outer package, the electrode assembly comprises a positive electrode sheet, a positive electrode active material layer is provided on the positive electrode sheet, and the positive active material layer comprises a transition metal oxide; the outer package is used for packaging the electrode assembly, a venting device is arranged on the outer package, and the venting device comprises a breathable membrane. The venting device is mounted on the outer package of the battery cell, and excess gas generated due to the instability of transition metals during use of the battery cell is discharged out of the battery cell in time by means of the breathable membrane of the venting device, so that the explosion-proof valve of the battery cell is not prone to abnormal valve opening due to excessively large internal air pressure, improving the reliability of the battery and prolonging the service life thereof.

## Description

### TECHNICAL FIELD

This application pertains to the field of battery technologies, and specifically relates to a battery cell and a manufacturing method thereof, a battery, and an electric apparatus.

### BACKGROUND

In the related art, a positive electrode material of a battery contains active elements. During use, the instability of the active elements causes an increase in gas generated inside the battery cell. When the internal pressure of the battery reaches an opening threshold of a battery explosion-proof valve, the explosion-proof valve of the battery cell opens abnormally, resulting in battery failure. Excessively high pressure may even cause accidents such as explosions, affecting the reliability of the battery cell.

### SUMMARY

Embodiments of this application are intended to provide a battery cell and a manufacturing method thereof, a battery, and an electric apparatus, so as to resolve the technical problem of poor battery reliability in the prior art.

To achieve the foregoing objective, the following technical solutions are used in this application.

According to a first aspect, this application provides a battery cell, including an electrode assembly and an outer package. The electrode assembly includes a positive electrode plate, the positive electrode plate is provided with a positive electrode active material layer, and the positive electrode active material layer includes a transition metal oxide. The outer package is configured to package the electrode assembly, the outer package is provided with a venting means, and the venting means includes a gas-permeable film.

In the technical solution of the embodiments of this application, when the positive electrode active material layer includes the transition metal oxide, the following issues may occur during use at high temperature or high pressure, for example, the structural phase transition leads to oxygen release, the dissolution of the transition metal catalyzes the oxidative decomposition of the electrolyte, or the decomposition and repair of the SEI are promoted, resulting in an increase in gas generated inside the battery cell. With the venting means installed on the outer package of the battery cell, where the venting means includes the gas-permeable film, excess gas generated during use of the battery due to the instability of the transition metal is promptly discharged to the outside of the battery cell through the gas-permeable film of the venting means, so that an explosion-proof valve of the battery cell is less likely to experience abnormal opening caused by excessive internal pressure, thereby enhancing the reliability and service life of the battery.

In some embodiments, the venting means further includes a connecting member, where the connecting member is provided with at least one through hole, the gas-permeable film is disposed on a side of the connecting member facing toward the interior of the battery cell, and the gas-permeable film covers all the through holes.

In the technical solution of the embodiments of this application, the venting means includes the connecting member, the connecting member is provided with at least one through hole, the gas-permeable film is disposed on the side of the connecting member facing toward the interior of the battery cell, and the gas-permeable film covers all the through holes. In this case, during venting, the connecting member can support the gas-permeable film, which prevents deformation or displacement of the gas-permeable film due to excessive internal pressure of the battery cell while ensuring a sufficient venting area, maintaining the integrity of the gas-permeable film, thereby enhancing the safety and reliability. In addition, the gas-permeable film being disposed on the side of the connecting member facing toward the interior of the battery cell can improve the external space utilization of the outer package, facilitating the arrangement of other components. When the gas generated inside the battery cell increases and reaches a certain pressure, a pressure difference is generated between the inner and outer sides of the gas-permeable film, so that excess gas inside the battery cell can pass through the gas-permeable film and be discharged to the outside of the battery cell through the through holes, thereby enhancing the reliability of the battery cell.

In some embodiments, the gas-permeable film is sealingly connected to a contact surface of the connecting member.

In the technical solution of the embodiments of this application, the gas-permeable film is sealingly connected to the contact surface of the connecting member, so that the contact surface between the gas-permeable film and the connecting member remains sealed, and the connecting member can support the gas-permeable film, enhancing the reliability of the venting means.

In some embodiments, the connecting member is provided with a plurality of through holes, where a hole diameter of each through hole is less than or equal to 3 mm.

In the technical solution of the embodiments of this application, the through hole is provided in plurality, and the hole diameter of each through hole is less than or equal to 3 mm, which prevents deformation or displacement of the gas-permeable film due to excessive internal pressure of the battery cell, ensuring the reliability of the gas-permeable film, thereby enhancing the service life of the battery cell.

In some embodiments, in an axial direction of the through holes, all the through holes have an orthographic projection area of 10 mm² to 50 mm².

In the technical solution of the embodiments of this application, the orthographic projection area of all the through holes is set within the foregoing range, so that gas inside the battery cell can be promptly discharged to the outside of the battery cell through the gas-permeable film and the through holes.

In some embodiments, a thickness of the gas-permeable film is 0.1 mm to 3 mm, and optionally, the thickness is 0.2 mm to 0.8 mm.

In the technical solution of the embodiments of this application, the thickness of the gas-permeable film is 0.1 mm to 3 mm, and optionally, the thickness is 0.2 mm to 0.8 mm, so that the gas-permeable film maintains a certain gas permeation rate within the thickness range.

In some embodiments, the venting means further includes a backing member, where the backing member is disposed between the connecting member and the gas-permeable film, the gas-permeable film covers the backing member, and the backing member covers all the through holes.

In the technical solution of the embodiments of this application, the venting means further includes the backing member, the backing member is disposed between the connecting member and the gas-permeable film, the gas-permeable film covers the backing member, and the backing member covers all the through holes. In this case, gas inside the battery cell passes through the gas-permeable film and the backing member in sequence and is then discharged to the outside of the battery cell through the through holes, and the backing member can support the gas-permeable film, which prevents deformation or displacement of the gas-permeable film due to excessive internal pressure of the battery cell while ensuring a sufficient venting area, maintaining the integrity of the gas-permeable film. In addition, the backing member can isolate the gas-permeable film from contact with substances outside the battery cell, thereby prolonging the service life.

In some embodiments, a recess is provided on the side of the connecting member facing toward the interior of the battery cell, where the recess is configured to accommodate the gas-permeable film and/or the backing member.

In the technical solution of the embodiments of this application, the recess is provided on the side of the connecting member facing toward the interior of the battery, and the recess is configured to accommodate the gas-permeable film and/or the backing member, so as to reduce the space occupied by the backing member or the gas-permeable film.

In some embodiments, the backing member has a greater gas permeability than the gas-permeable film.

In the technical solution of the embodiments of this application, the backing member has a greater gas permeability than the gas-permeable film, so that the backing member does not impair the gas permeability of the gas-permeable film, allowing gas inside the battery cell to be promptly discharged to the outside of the battery cell through the gas-permeable film, the backing member, and the through holes.

In some embodiments, the backing member has a higher melting point than the gas-permeable film.

In the technical solution of the embodiments of this application, the backing member has a higher melting point than the gas-permeable film, so that the backing member has better high-temperature resistance than the gas-permeable film. The temperature at which the gas-permeable film is fused with the connecting member such as an aluminum sheet is higher than the melting point of the gas-permeable film. To prevent the gas-permeable film from being fused with the backing member during fusion and to prevent change of the gas permeation characteristics of the backing member caused by its melting due to the temperature, the melting point of the backing member is set to be higher than that of the gas-permeable film, so that the backing member and the gas-permeable film are less likely to adhere to each other, thereby preventing blockage of the gas-permeable film. In addition, the gas permeation performance of the backing member is not affected by its melting due to the temperature.

In some embodiments, a gas-permeable area of the backing member is 50 mm² to 200 mm².

In the technical solution of the embodiments of this application, the gas-permeable area of the backing member is set within the foregoing range, so that gas inside the battery cell can be promptly discharged to the outside of the battery cell through the gas-permeable film and the backing member.

In some embodiments, the outer package includes an end cover, where the venting means is disposed on a side of the end cover facing toward the battery cell, and the end cover is provided with a venting hole communicating with the through hole of the venting means.

In the technical solution of the embodiments of this application, the venting means is disposed on the side of the end cover facing toward the battery cell, and the end cover is provided with the venting hole communicating with the through hole of the venting means, so that gas accumulated above the interior of the battery cell can be quickly discharged to the outside of the battery cell through the venting means and the venting hole.

In some embodiments, an accommodating recess for accommodating the venting means is provided on the side of the end cover facing toward the interior of the battery cell, where when the venting means is installed into the accommodating recess, a gas guide channel is provided above the through hole of the venting means, the through hole communicates with the venting hole through the gas guide channel, and the venting hole and the through hole are staggered.

In the technical solution of the embodiments of this application, with the gas guide channel provided, gas is briefly buffered, after being discharged through the through hole of the venting means, and then discharged to the outside of the battery cell from the venting hole. The venting hole and the through hole being staggered can protect the venting means, preventing external impurities from affecting the gas permeation effect of the venting means after entering the venting hole.

In some embodiments, an insulating member is provided on an inner side of the end cover, where the insulating member is provided with a gas permeation hole, and gas inside the battery cell is discharged to the outside of the battery cell through the gas permeation hole, the venting means, the gas guide channel, and the venting hole.

In the technical solution of the embodiments of this application, with the foregoing provision, gas inside the battery cell can freely pass through the gas permeation hole and be promptly discharged to the outside of the battery cell through the venting means.

In some embodiments, in a thickness direction of the end cover, an orthographic projection of the gas permeation hole covers orthographic projections of all the through holes.

In the technical solution of the embodiments of this application, in the thickness direction of the end cover, the orthographic projection of the gas permeation hole can cover the orthographic projections of all the through holes, so that gas inside the battery cell can freely pass through the gas permeation hole and be promptly discharged to the outside of the battery cell through the venting means, which is less likely to affect the gas permeation effect of the venting means.

In some embodiments, a chemical formula of the transition metal oxide is AMOₛ, where 1≤s≤2, the element A includes at least one of Li, Na, K, or Mg, and the element M includes a transition metal element.

In the technical solution of the embodiments of this application, the transition metal oxide may be a positive electrode active material for lithium batteries, sodium batteries, potassium batteries, or magnesium batteries, and the transition metal oxide of the positive electrode active material contains the transition metal element. With such transition metal oxide used as the positive electrode active material of the battery, the battery can have high energy and power density.

In some embodiments, the transition metal oxide is Naₚ(NiₓFe_{y}Mn_{z}Me_{q})O₂, where the element Me includes any one or more of Zn, Ti, Zr, Mg, La, Y, Co, Cr, Al, K, V, Mo, W, Sr, Ta, Nb, or Ca, 0.8≤p<1, 0.01≤x<0.35, 0.01≤y<0.35, 0.01≤z<0.5, 0.01≤q<0.3, and 0.81≤x+y+z<1.

In the technical solution of the embodiments of this application, the transition metal oxide is Naₚ(NiₓFe_{y}Mn_{z}Me_{q})O₂, where the element Me includes any one or more of Zn, Ti, Zr, Mg, La, Y, Co, Cr, Al, K, V, Mo, W, Sr, Ta, Nb, or Ca, 0.8≤p<1, 0.01≤x<0.35, 0.01≤y<0.35, 0.01≤z<0.5, 0.01≤q<0.3, and 0.81≤x+y+z<1, so that the battery can have high energy and power density.

In some embodiments, a single-sided thickness of the positive electrode active material layer is 50 µm to 150 µm, and optionally, the single-sided thickness is 55 µm to 130 µm.

In the technical solution of the embodiments of this application, the single-sided thickness of the positive electrode active material is set within the foregoing range to shorten the ion conduction path, so that the battery has high energy density.

In some embodiments, a porosity of the positive electrode active material layer is 1% to 70%, and optionally, the porosity is 8% to 50%.

In the technical solution of the embodiments of this application, the porosity of the positive electrode active material layer is set within the foregoing range. A smaller porosity results in a smaller contact area and interaction interface between the transition metal oxide of the positive electrode active material and the electrolyte, reducing side reactions and gas generated, and enabling the battery to have good capacity and cycle life.

In some embodiments, a specific surface area BET of the transition metal oxide in the positive electrode active material layer satisfies 0.2 m²/g≤BET≤1.5 m²/g, and optionally 0.4 m²/g≤BET≤1.2 m²/g.

In the technical solution of the embodiments of this application, a smaller specific surface area BET of the material tends to indicate a smaller contact area and interaction interface with the electrolyte, reducing gas generated. However, if the specific surface area BET is too small, the structure has insufficient stability and is prone to collapse and breakage, increasing side reactions. Therefore, the specific surface area of the transition metal oxide in the positive electrode active material layer is set to satisfy the foregoing range, so that the battery has less gas generated and fewer side reactions while maintaining the structural stability of the positive electrode active material.

In some embodiments, a median particle size of the transition metal oxide satisfies 2 µm≤D_{V}50≤12 µm, and optionally 3 µm≤D_{V}50≤10 µm.

In the technical solution of the embodiments of this application, a larger particle size of the material tends to indicate a smaller contact area and interaction interface with the electrolyte, reducing gas generated. However, if the particle size is too large, the material is prone to breakage and has insufficient structural stability. Therefore, the median particle size of the transition metal oxide is set to satisfy the foregoing range, so that the battery has less gas generated while maintaining the structural stability of the positive electrode active material.

In some embodiments, the battery cell further includes an electrolyte, where a conductivity of the electrolyte is 5 mS/cm to 18 mS/cm, and optionally, the conductivity is 6 mS/cm to 12 mS/cm.

In the technical solution of the embodiments of this application, the conductivity of the electrolyte is set within the foregoing range, so that the battery has good efficiency and energy density, better ensuring the stability and safety of the battery.

In some embodiments, a solute concentration of the electrolyte is 0.7 mol/L to 1.2 mol/L, and optionally, the solute concentration is 0.85 mol/L to 1.1 mol/L.

In the technical solution of the embodiments of this application, the solute concentration of the electrolyte is set within the foregoing range, so that the battery has good charge and discharge efficiency, better ensuring the stability and safety of the battery.

In some embodiments, a residual space coefficient of the battery cell is 0.02 mL/Ah to 1 mL/Ah, and optionally 0.2 mL/Ah to 0.8 mL/Ah.

In the technical solution of the embodiments of this application, the residual space coefficient of the battery cell is set within the foregoing range, so that the battery cell has a certain gas accommodating space inside, and excess gas can be discharged to the outside of the battery cell through the venting means, thereby improving the safety of the battery.

In some embodiments, a gas permeation rate of the gas-permeable film is 0.1 mL/D to 5 mL/D, optionally 0.2 mL/D to 4 mL/D, and more optionally 0.2 mL/D to 0.7 mL/D.

In the technical solution of the embodiments of this application, the gas permeation rate of the gas-permeable film is set within the foregoing range, so that excess gas generated inside the battery cell can be discharged to the outside of the battery cell through the gas-permeable film.

In some embodiments, a gas permeation rate v of the gas-permeable film and a gas generation rate V inside the battery cell satisfy 0.9≤v/V≤5, and optionally 1≤v/V≤4.

In the technical solution of the embodiments of this application, the ratio of the gas permeation rate v of the gas-permeable film to the gas generation rate V inside the battery cell satisfies the foregoing relationship, so that the gas-permeable film has an appropriate gas permeation effect, allowing gas generated inside the battery cell to be promptly discharged from the gas-permeable film. When the ratio is too small, the gas-permeable film has a poor gas permeation effect. When the ratio is too large, the gas-permeable film is prone to infiltration of moisture from the air, deteriorating the service life.

In some embodiments, a stoichiometric ratio z of the element Mn in the transition metal oxide Naₚ(NiₓFe_{y}Mn_{z}Me_{q})O₂ and a gas permeation rate v of the gas-permeable film satisfy 0.1≤z/v≤2, and optionally 0.25≤z/v≤1.7.

In the technical solution of the embodiments of this application, due to the Jahn-Teller effect of the element Mn, accompanied by element valence change and bulk phase distortion, the element Mn tends to be released from the lattice and deposit onto the negative electrode, catalyzing the decomposition of the solid electrolyte interface (SEI) and generating gas. A larger stoichiometric ratio z of the element Mn indicates a greater gas generation rate and a greater required gas permeation rate v of the gas-permeable film. The stoichiometric ratio of the element Mn in the transition metal oxide and the gas permeation rate v of the gas-permeable film satisfy the foregoing relationship, so that the gas permeation rate of the gas-permeable film can match the gas generation rate affected by the element Mn, and the battery cell has an appropriate gas permeation effect. When the ratio is too large, the gas-permeable film of the battery cell has an insufficient gas permeation rate and poor effect. When the ratio is too small, the gas-permeable film is prone to infiltration of moisture from the air, deteriorating the service life.

In some embodiments, the outer package is further provided with an explosion-proof valve.

In the technical solution of the embodiments of this application, the outer package is further provided with the explosion-proof valve. The provided explosion-proof valve can promptly open when the internal pressure of the battery cell is too high, so as to release the pressure inside the battery cell, preventing the battery from exploding during thermal runaway.

According to a second aspect, this application further provides a manufacturing method of battery cell, including:
providing an electrode assembly, where the electrode assembly includes a positive electrode plate, the positive electrode plate is provided with a positive electrode active material layer, and the positive electrode active material layer includes a transition metal oxide; and
providing an outer package, where the outer package is provided with a venting means, the outer package packages an outer side of the electrode assembly, and the venting means includes a gas-permeable film.

According to a third aspect, this application further provides a battery, where the battery includes the foregoing battery cell.

According to a fourth aspect, this application further provides an electric apparatus, where the electric apparatus includes the foregoing battery.

### BRIEF DESCRIPTION OF DRAWINGS

To describe the technical solutions in the embodiments of this application more clearly, the following briefly describes the accompanying drawings required for describing the embodiments or prior art. Apparently, the accompanying drawings in the following description show merely some embodiments of this application, and persons of ordinary skill in the art may still derive other drawings from these accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a schematic structural diagram of a venting means according to some embodiments of this application;
FIG. 5 is a schematic structural cross-sectional view of the venting means in FIG. 4;
FIG. 6 is a schematic structural cross-sectional view of the venting means in FIG. 4 fitting with an end cover;
FIG. 7 is a schematic structural diagram of a venting means according to some other embodiments of this application;
FIG. 8 is a schematic structural exploded view of the venting means in FIG. 7;
FIG. 9 is a schematic structural cross-sectional view of the venting means in FIG. 7; and
FIG. 10 is a schematic structural cross-sectional view of the venting means in FIG. 7 fitting with an end cover.

Reference signs in the figures:
1000. vehicle;
100. battery; 200. controller; 300. motor;
10. box; 11. first portion; 12. second portion;
20. battery cell; 21. end cover; 21a. electrode terminal; 21b. explosion-proof valve; 22. housing; 23. electrode assembly; 23a. tab; 24. venting means; 25. insulating member; 26. outer package; 211. venting hole; 212. gas guide channel; 240. gas-permeable film; 241. through hole; 242. connecting member; 244. backing member; 245. recess; 251. gas permeation hole.

### DESCRIPTION OF EMBODIMENTS

To make the technical problem to be resolved, technical solutions, and beneficial effects of this application clearer and more comprehensible, the following further describes this application in detail with reference to the accompanying drawings and embodiments. It should be understood that the specific embodiments described herein are merely used to explain this application but are not intended to limit this application.

It should be noted that when an element is referred to as being "fixed to" or "disposed on" another element, it may be directly or indirectly fixed to the another element. When an element is referred to as being "connected to" another element, it may be directly or indirectly connected to the another element.

It should be understood that the orientations or positional relationships indicated by the terms "length", "width", "upper", "lower", "front", "rear", "left", "right", "vertical", "horizontal", "top", "bottom", "inside", "outside", and the like are based on the orientations or positional relationships shown in the accompanying drawings. These terms are merely for ease and brevity of description of this application rather than indicating or implying that the apparatuses or elements mentioned must have specific orientations or must be constructed or manipulated according to specific orientations, and therefore shall not be construed as any limitations on this application.

In addition, the terms "first", "second", "third", "fourth", "fifth", "sixth", and "seventh" are merely for the purpose of description, and shall not be understood as any indication or implication of relative importance or any implicit indication of the number of technical features indicated. Therefore, a feature limited by "first", "second", "third", "fourth", "fifth", "sixth", or "seventh" may explicitly or implicitly include one or more such features. In the description of this application, "a plurality of" means two or more, unless otherwise specifically defined.

In batteries such as lithium batteries, sodium batteries, and potassium batteries, layered oxide positive electrode active materials, due to the presence of active transition metal elements, generally undergo the following issues during use at high temperature or high pressure, for example, the structural phase transition of the material leads to oxygen release, the dissolution of the transition metal catalyzes the oxidative decomposition of the electrolyte, and the decomposition and repair of the solid electrolyte interface (SEI) are promoted, ultimately resulting in an increase in gas generated inside the battery cell. When the internal pressure of the battery cell reaches the opening threshold of the battery explosion-proof valve, the battery explosion-proof valve opens abnormally, resulting in battery failure. Excessive pressure may even cause accidents such as explosions, affecting the reliability and service life of the battery.

In view of this, to resolve the problem that during use of the battery cell, the presence of transition metal elements in the positive electrode active material leads to an increase in gas generated and ultimately causes the battery cell to fail after abnormal valve opening, which affects the reliability of the battery cell, a battery cell is designed. With a venting means installed on an outer package of the battery cell, where the venting means includes a gas-permeable film, excess gas generated during use of the battery due to the instability of transition metal is promptly discharged to the outside of the battery cell through the venting means, so that an explosion-proof valve of the battery cell is less likely to experience abnormal opening caused by excessive internal pressure, thereby enhancing the reliability and service life of the battery.

The battery cell disclosed in the embodiments of this application can be used for electric apparatuses that use a battery as a power source or various energy storage systems that use a battery as an energy storage element. The electric apparatus may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus of an embodiment of this application being a vehicle 1000 is used as an example for description of the following embodiments.

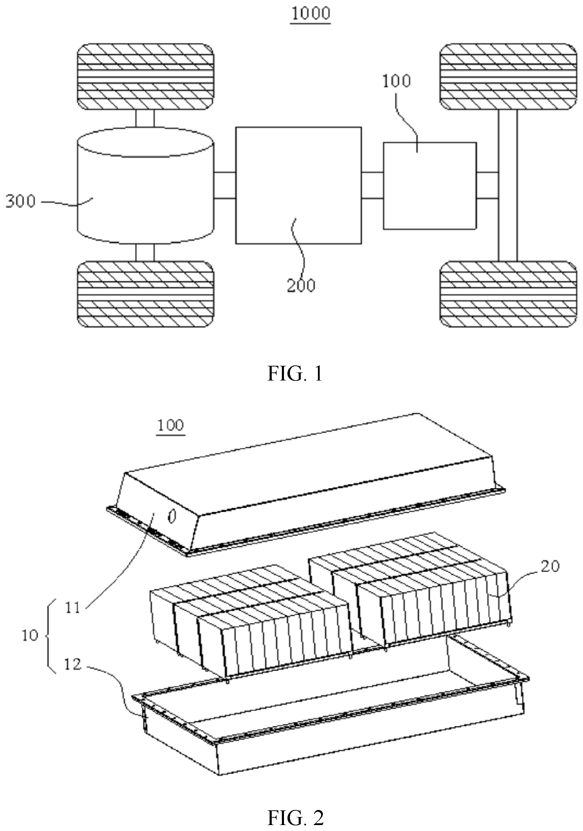

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000. The battery 100 may alternatively be an energy storage apparatus, and the energy storage apparatus includes an energy storage container or an energy storage cabinet.

Referring to FIG. 2, FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together to jointly define an accommodating space for accommodating the battery cell 20. The second portion 12 may be a hollow structure with an opening at one end, the first portion 11 may be a plate-shaped structure, and the first portion 11 covers the opening side of the second portion 12 so that the first portion 11 and the second portion 12 jointly define the accommodating space. Alternatively, both the first portion 11 and the second portion 12 may be hollow structures with an opening at one side, and the opening side of the first portion 11 is engaged with the opening side of the second portion 12. Certainly, the box 10 formed by the first portion 11 and the second portion 12 may be of various shapes, for example, cylinder or cuboid.

In the battery 100, the battery cell 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 being connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, without being limited thereto. The battery cell 20 may be cylindrical, flat, cuboid, or of other shapes.

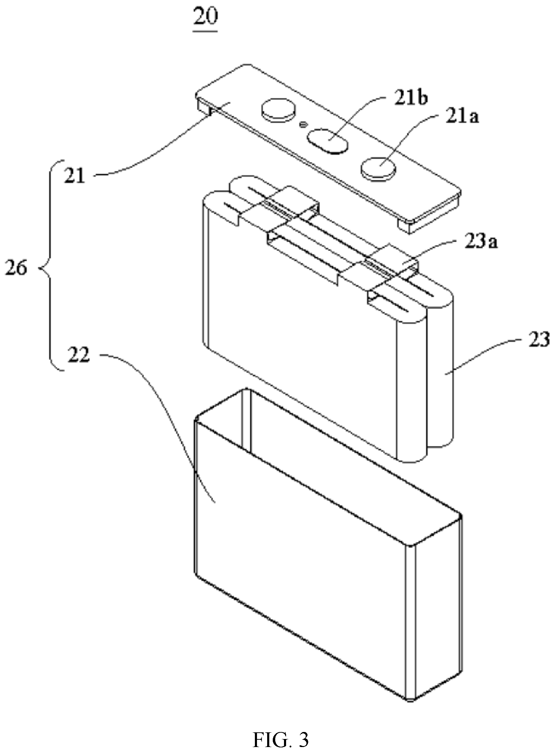

Referring to FIG. 3, FIG. 3 is a schematic structural exploded view of a battery cell 20 according to some embodiments of this application. The battery cell 20 is a smallest unit constituting a battery. As shown in FIG. 3, the battery cell 20 includes an outer package, an electrode assembly 23, and an electrolyte, where the outer package includes an end cover 21 and a housing 22.

The end cover 21 is a component that covers an opening of the housing 22 to isolate an internal environment of the battery cell 20 from an external environment. Without limitation, the shape of the end cover 21 may be adapted to the shape of the housing 22 to fit the housing 22. Optionally, the end cover 21 may be made of a material with certain hardness and strength (for example, aluminum alloy), so that the end cover 21 is less likely to deform when subjected to extrusion and collision, allowing the battery cell 20 to have higher structural strength and enhanced safety performance. Functional components such as an electrode terminal 21a may be provided on the end cover 21. The electrode terminal 21a may be configured to be electrically connected to the electrode assembly 23 for outputting or inputting electrical energy of the battery cell 20. In some embodiments, the end cover 21 may be further provided with an explosion-proof valve 21b for releasing internal pressure when the internal pressure or temperature of the battery cell 20 reaches a threshold. The end cover 21 may also be made of various materials, such as copper, iron, aluminum, stainless steel, aluminum alloy, and plastic, which are not particularly limited in the embodiments of this application. In some embodiments, an insulating member 25 may also be provided at an inner side of the end cover 21. The insulating member 25 can be configured to insulate an electrical connection component in the housing 22 from the end cover 21 to reduce the risk of short circuit. For example, the insulating member 25 may be made of plastic, rubber, or the like.

The housing 22 is an assembly configured to form an internal environment of the battery cell 20 by fitting with the end cover 21, where the formed internal environment may be used to accommodate the electrode assembly 23, the electrolyte, and other components. The housing 22 and the end cover 21 may be separate components, an opening may be provided on the housing 22, and the end cover 21 covers the opening to form the internal environment of the battery cell 20. Without limitation, the end cover 21 and the housing 22 may alternatively be integrated. Specifically, the end cover 21 and the housing 22 may form a shared connection surface before other components are disposed inside the housing, and then the housing 22 is covered with the end cover 21 when the inside of the housing 22 needs to be enclosed. The housing 22 may be of various shapes and sizes, such as a cuboid shape, a cylindrical shape, and a hexagonal prism shape. Specifically, the shape of the housing 22 may be determined according to a specific shape and size of the electrode assembly 23. The housing 22 may be made of various materials, such as copper, iron, aluminum, stainless steel, aluminum alloy, and plastic, which are not particularly limited in the embodiments of this application.

The electrode assembly 23 is a component in which electrochemical reactions take place in the battery cell 20. The housing 22 may include one or more electrode assemblies 23. The electrode assembly 23 is mainly formed by winding or stacking a positive electrode plate and a negative electrode plate, and a separator is generally disposed between the positive electrode plate and the negative electrode plate. The positive electrode plate may include a positive electrode current collector and positive electrode active material layers applied on two opposite sides of the positive electrode current collector. The negative electrode plate may include a negative electrode current collector and negative electrode active material layers applied on two opposite sides of the negative electrode current collector. Parts of the positive electrode plate and the negative electrode plate with active substances constitute a body portion of the electrode assembly, while parts of the positive electrode plate and the negative electrode plate without active substances separately constitute a tab 23a. A positive tab and a negative tab may both be located on one end of the body portion or be located on two ends of the body portion respectively. During charging and discharging of the battery, a positive electrode active substance and a negative electrode active substance react with the electrolyte, and the tabs 23a are connected to the electrode terminals to form a current loop.

In the technical solution of the embodiments of this application, a battery cell is provided, including an electrode assembly 23 and an outer package 26. The electrode assembly 23 includes a positive electrode plate, the positive electrode plate is provided with a positive electrode active material layer, and the positive electrode active material layer includes a transition metal oxide. The outer package 26 is configured to package the electrode assembly 23, the outer package 26 is provided with a venting means 24, and the venting means 24 includes a gas-permeable film 240.

The venting means 24 is a component for discharging gas inside the battery cell 20. When the gas generated inside the battery cell increases and the internal space of the battery cell 20 cannot accommodate the excess gas, the gas inside the battery cell 20 is promptly discharged through the venting means 24. The gas-permeable film 240 may be a component with the gas permeation function.

In the technical solution of the embodiments of this application, when the positive electrode active material layer includes the transition metal oxide, the following issues may occur during use at high temperature or high pressure, for example, the structural phase transition leads to oxygen release, the dissolution of the transition metal catalyzes the oxidative decomposition of the electrolyte, or the decomposition and repair of the SEI are promoted, resulting in an increase in gas generated inside the battery cell 20. With the venting means 24 installed on the outer package 26 of the battery cell, where the venting means 24 includes the gas-permeable film 240, excess gas generated during use of the battery due to the instability of the transition metal is promptly discharged to the outside of the battery cell through the gas-permeable film 240 of the venting means 24, so that the internal pressure of the battery cell 20 does not easily reach an opening threshold of an explosion-proof valve 21b, and the explosion-proof valve 21b is less likely to experience abnormal opening caused by excessive internal pressure of the battery cell, thereby enhancing the reliability and service life of the battery.

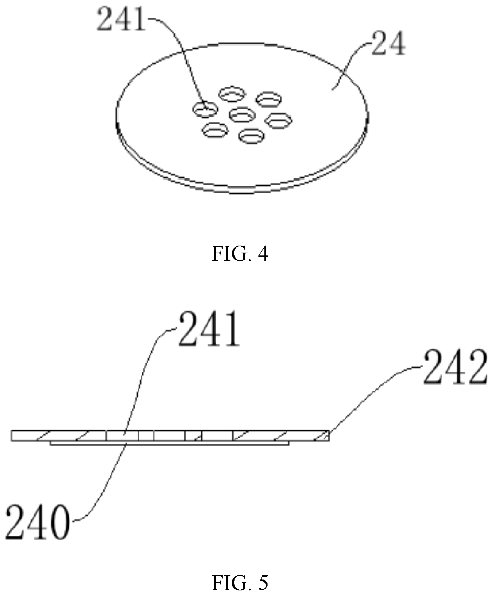

Referring to FIGs. 4 and 5 or FIGs. 7, 8, and 9, in some embodiments, the venting means 24 includes a connecting member 242, where the connecting member 242 is provided with at least one through hole 241, the gas-permeable film 240 is disposed on a side of the connecting member 242 facing toward the interior of the battery cell 20, and the gas-permeable film 240 covers all the through holes 241.

The connecting member 242 may be a component connected to the outer package 26, which may be a separate structure. Alternatively, the connecting member 242 may be part of the outer package 26, that is, being an integral structure with the outer package 26. The connecting member 242 may be fixedly connected to the outer package by welding or the like.

In some embodiments, the connecting member 242 may be a metal aluminum sheet. The number of through holes 241 on the connecting member 242 may be one, two, three, or more. The shape of the through hole 241 may be a regular geometric shape, such as a circle, an ellipse, or a regular polygon. Certainly, it may alternatively be an irregular geometric shape.

In the foregoing arrangement, the gas-permeable film 240 is disposed on the side of the connecting member 242 facing toward the interior of the battery cell 20, so that during venting, the connecting member 242 can support the gas-permeable film 240, which prevents deformation or displacement of the gas-permeable film 240 due to excessive internal pressure of the battery cell while ensuring a sufficient venting area, maintaining the integrity of the gas-permeable film 240, thereby enhancing the safety. In addition, the gas-permeable film 240 being disposed on the side of the connecting member 242 facing toward the interior of the battery cell can improve the external space utilization of the outer package, facilitating the arrangement of other components. When the gas generated inside the battery cell 20 increases and reaches a certain pressure, a pressure difference is generated between the inner and outer sides of the gas-permeable film 240, so that excess gas inside the battery cell 20 can pass through the gas-permeable film 240 and be discharged to the outside of the battery cell through the through holes 241, thereby enhancing the reliability of the battery cell.

Referring to FIGs. 4 and 5, in some embodiments, the gas-permeable film 240 is sealingly connected to a contact surface of the connecting member 242.

In some embodiments, the material of the gas-permeable film may be polyolefin or polyurethane. The polyolefin may be, for example, polypropylene, polyethylene, or polypropylene ethylene. The gas-permeable film 240 may be sealingly connected to the contact surface of the connecting member 242 by fusion bonding.

In the foregoing arrangement, the gas-permeable film 240 is sealingly connected to the contact surface of the connecting member 242, so that the contact surface between the gas-permeable film 240 and the connecting member 242 remains sealed, and the connecting member 242 can support the gas-permeable film 240, enhancing the reliability of the venting means.

Referring to FIGs. 4 and 5, in some embodiments, the connecting member 242 is provided with a plurality of through holes 241, where a hole diameter of each through hole is less than or equal to 3 mm.

The plurality may be two, three, or more. The through hole may be a small circular hole.

In the foregoing arrangement, the through hole 241 is provided in plurality, and the hole diameter of each through hole is less than or equal to 3 mm. For example, the hole diameter of each through hole may be a typical but non-limiting hole diameter such as 0.5 mm, 1 mm, 1.5 mm, 2 mm, 2.5 mm, or 3 mm, or within a range defined by any two hole diameters, which prevents deformation or displacement of the gas-permeable film 240 due to excessive internal pressure of the battery cell, ensuring the reliability of the gas-permeable film 240, thereby enhancing the service life of the battery cell.

In some embodiments, in an axial direction of the through hole 241, all the through holes 241 have an orthographic projection area of 10 mm² to 50 mm². For example, the orthographic projection area of all the through holes 241 may be a typical but non-limiting area such as 10 mm², 13 mm², 15 mm², 18 mm², 20 mm², 22 mm², 25 mm², 27 mm², 30 mm², 33 mm², 35 mm², 37 mm², 40 mm², 42 mm², 45 mm², 48 mm², or 50 mm², or within a range defined by any two areas. The orthographic projection area of all the through holes is set within the foregoing range, so that gas inside the battery cell 20 can be promptly discharged to the outside of the battery cell 20 through the gas-permeable film 240 and the through holes 241.

In some embodiments, a thickness of the gas-permeable film 240 is 0.1 mm to 3 mm, and optionally, the thickness is 0.2 mm to 0.8 mm. For example, the thickness of the gas-permeable film 240 may be a typical but non-limiting thickness such as 0.1 mm, 0.2 mm, 0.3 mm, 0.4 mm, 0.5 mm, 0.6 mm, 0.7 mm, 0.8 mm, or 3 mm, or within a range defined by any two thicknesses, so that the gas-permeable film maintains a certain gas permeation rate within the thickness range.

In some embodiments, the venting means 24 may be installed on a side of the end cover 21 facing toward the interior of the battery cell, or may be installed on a side of the end cover 21 facing away from the interior of the battery cell, and the end cover 21 is provided with a venting hole 211 communicating with the through hole 241 of the venting means 24, provided that the venting means 24 can discharge gas inside the battery cell 20 to the outside of the battery cell 20.

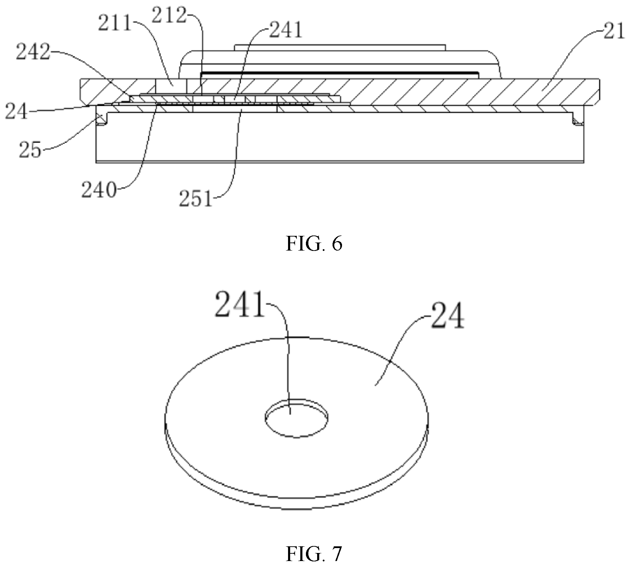

Referring to FIG. 6, FIG. 6 is a schematic structural cross-sectional view of the venting means in FIG. 4 fitting with an end cover according to some embodiments. In the installation manner shown in FIG. 6, the venting means 24 is installed on a side of the end cover 21 facing toward the interior of the battery cell. An accommodating recess for accommodating the venting means 24 is provided on the side of the end cover 21 facing toward the interior of the battery cell 20, so that the venting means 24 is installed into the accommodating recess of the end cover 21. In some embodiments, the insulating member 25 located on the inner side of the end cover 21 is provided with a gas permeation hole 251, a venting hole 211 is provided on an outer side of the end cover 21, and gas inside the battery cell 20 is discharged to the outside of the battery cell 20 through the gas permeation hole 251, the gas-permeable film 240 of the venting means 24, the through hole 241, and the venting hole 211.

In some embodiments, after the venting means 24 is installed into the accommodating recess of the end cover 21, a gas guide channel 212 may be formed between the through hole 241 of the venting means 24 and the venting hole 211. With the gas guide channel 212, gas can be briefly buffered, after being discharged through the through hole 241, and then discharged from the venting hole 211.

In some embodiments, the venting hole 211 and the through hole 241 being staggered can protect the gas-permeable film 240 of the venting means 24, preventing external impurities from affecting the gas permeation effect of the gas-permeable film 240 after entering the venting hole 211.

In some embodiments, in a thickness direction of the end cover 21, an orthographic projection of the gas permeation hole 251 of the insulating member 25 covers orthographic projections of all the through holes 241, so that gas inside the battery cell can freely pass through the gas permeation hole 251 and be promptly discharged to the outside of the battery cell through the venting means 24.

Referring to FIGs. 7, 8, and 9, in some embodiments, the venting means 24 further includes a backing member 244, where the backing member 244 is disposed between the connecting member 242 and the gas-permeable film 240, the gas-permeable film 240 covers the backing member 244, and the backing member 244 covers all the through holes 241.

In some embodiments, the backing member 244 may be a component that supports the gas-permeable film 240 in the venting means 24, so that the gas-permeable film 240 is less likely to deform. The backing member 244 may be a porous polymer such as polypropylene, polyamide, polytetrafluoroethylene, or fluorinated ethylene propylene, or a metal-organic framework porous material, or a carbon film and ceramic porous material.

In the foregoing arrangement, gas inside the battery cell 20 can pass through the gas-permeable film 240 and the backing member 244 in sequence and then be discharged to the outside of the battery cell 20 through the through holes 241, the area of the backing member 244 is the gas-permeable area, and the backing member 244 can support the gas-permeable film 240, which prevents deformation or displacement of the gas-permeable film 240 due to excessive internal pressure of the battery cell while ensuring a sufficient venting area, maintaining the integrity of the gas-permeable film 240. In addition, the backing member 244 can isolate the gas-permeable film 240 from contact with substances outside the battery cell 20, thereby prolonging the service life.

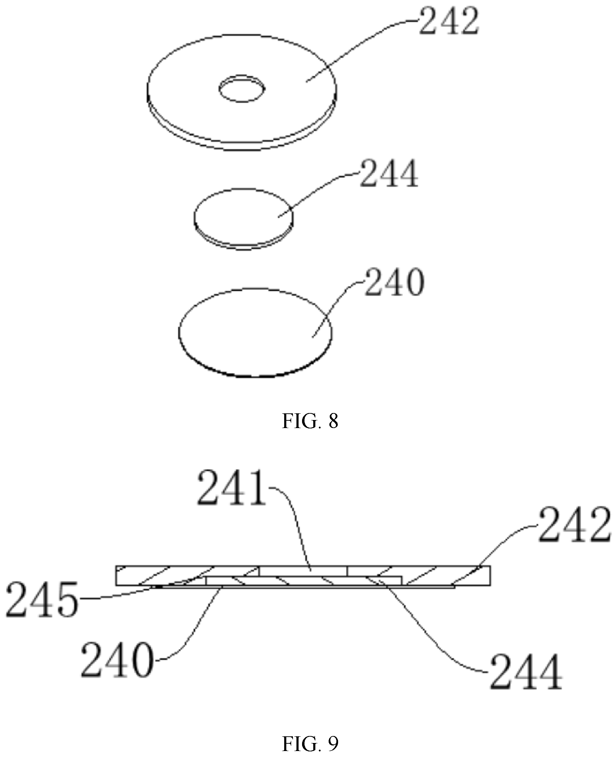

Referring to FIG. 9, in some embodiments, a recess 245 is provided on the side of the connecting member 242 facing toward the interior of the battery cell, where the recess 245 is configured to accommodate the gas-permeable film 240 and/or the backing member 244.

In some embodiments, the recess 245 is configured to accommodate the backing member 244.

The recess 245 is formed by recessing on the side of the connecting member 242 facing toward the interior of the battery cell.

In the foregoing arrangement, the recess 245 is provided on the side of the connecting member 242 facing toward the interior of the battery cell 20, and the recess is configured to accommodate the gas-permeable film 240 and/or the backing member 244, so as to reduce the space occupied by the gas-permeable film 240 and/or the backing member 244.

In some embodiments, the backing member 244 has a greater gas permeability than the gas-permeable film 240. In the foregoing arrangement, the backing member 244 does not impair the gas permeation effect of the gas-permeable film 240, allowing gas inside the battery cell 20 to be promptly discharged to the outside of the battery cell through the gas-permeable film 240, the backing member 244, and the through holes 241.

In some embodiments, a gas-permeable area of the backing member 244 is 50 mm² to 200 mm². For example, the gas-permeable area of the backing member 244 may be a typical but non-limiting gas-permeable area such as 50 mm², 60 mm², 70 mm², 80 mm², 90 mm², 100 mm², 110 mm², 120 mm², 130 mm², 140 mm², 150 mm², 160 mm², 170 mm², 180 mm², 190 mm², or 200 mm², or within a range defined by any two gas-permeable areas. For example, the gas-permeable area of the backing member 244 is 94.98 mm² or 167.1 mm².

In the technical solution of the embodiments of this application, the gas-permeable area of the backing member 244 is set within the foregoing range, so that gas inside the battery cell 20 can be promptly discharged to the outside of the battery cell through the gas-permeable film 240 and the backing member 244.

In some embodiments, the backing member 244 has a higher melting point than the gas-permeable film 240. For example, the melting point of the backing member 244 is from 160°C to 260°C. For example, the melting point of the backing member 244 is higher than that of the gas-permeable film 240 by 10°C, 15°C, 20°C, 25°C, 30°C, or the like, which are typical but non-limiting, or within a range defined by any two of these values, so that the backing member 244 has better high-temperature resistance than the gas-permeable film 240, and the backing member 244 and the gas-permeable film 240 are less likely to adhere to each other, thereby preventing blockage of the gas-permeable film 240. In addition, the gas permeation performance of the backing member 244 is not affected by its melting due to the temperature. Furthermore, the temperature at which the gas-permeable film 240 is fused with the connecting member 242 such as an aluminum sheet is higher than the melting point of the gas-permeable film 240. To prevent the gas-permeable film 240 from being fused with the backing member 244 during fusion and to prevent change of the gas permeation characteristics of the backing member 244 caused by its melting due to the temperature, the melting point of the backing member 244 is set to be higher than that of the gas-permeable film 240.

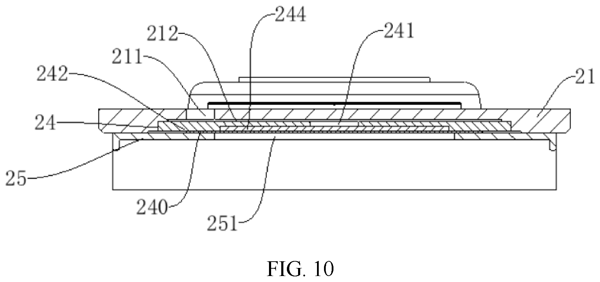

Referring to FIG. 10, FIG. 10 is a schematic structural cross-sectional view of the venting means in FIG. 7 fitting with an end cover according to some embodiments. In the installation manner shown in FIG. 10, the venting means 24 is installed on a side of the end cover 21 facing toward the interior of the battery cell. An accommodating recess for accommodating the venting means 24 is provided on the side of the end cover 21 facing toward the interior of the battery cell 20, so that the venting means 24 is installed into the accommodating recess of the end cover 21. In some embodiments, the insulating member 25 located on the inner side of the end cover 21 is provided with a gas permeation hole 251, a venting hole 211 is provided on an outer side of the end cover 21, and gas inside the battery cell 20 is discharged to the outside of the battery cell 20 through the gas permeation hole 251, the gas-permeable film 240 of the venting means 24, the backing member 244, the through hole 241, and the venting hole 211. In some embodiments, after the venting means 24 is installed into the accommodating recess of the end cover 21, a gas guide channel 212 may be formed between the through hole 241 and the venting hole 211. With the gas guide channel 212, gas can be briefly buffered, after being discharged through the through hole 241, and then discharged from the venting hole 211. In some embodiments, an orthographic projection area of the gas permeation hole 251 of the insulating member 25 is not less than a gas-permeable area of the backing member 244, so that gas inside the battery cell can freely pass through the gas permeation hole 251 and be promptly discharged to the outside of the battery cell through the venting means 24.

In some embodiments, a chemical formula of the transition metal oxide is AMOₛ, where 1≤s≤2, the element A includes at least one of Li, Na, K, or Mg, and the element M includes a transition metal element.

In the technical solution of the embodiments of this application, the transition metal oxide may be a positive electrode active material for lithium batteries, sodium batteries, potassium batteries, or magnesium batteries, and the transition metal oxide of the positive electrode active material contains the transition metal element. With such transition metal oxide used as the positive electrode active material of the battery, the battery can have high energy and power density.

In some embodiments, the transition metal oxide is Naₚ(NiₓFe_{y}Mn_{z}Me_{q})O₂, where the element Me includes any one or more of Zn, Ti, Zr, Mg, La, Y, Co, Cr, Al, K, V, Mo, W, Sr, Ta, Nb, or Ca, 0.8≤p<1, 0.01≤x<0.35, 0.01≤y<0.35, 0.01≤z<0.5, 0.01≤q<0.3, and 0.81≤x+y+z<1.

In the technical solution of the embodiments of this application, the transition metal oxide is Naₚ(NiₓFe_{y}Mn_{z}Me_{q})O₂, where the element Me includes any one or more of Zn, Ti, Zr, Mg, La, Y, Co, Cr, Al, K, V, Mo, W, Sr, Ta, Nb, or Ca, 0.8≤p<1, 0.01≤x<0.35, 0.01≤y<0.35, 0.01≤z<0.5, 0.01≤q<0.3, and 0.81≤x+y+z<1, so that the battery can have high energy and power density.

In some embodiments, a single-sided thickness of the positive electrode active material layer is 50 µm to 150 µm, and optionally, the single-sided thickness is 55 µm to 130 µm. For example, the single-sided thickness of the positive electrode active material layer may be a typical but non-limiting thickness such as 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm, or within a range defined by any two thicknesses.

The single-sided thickness is a thickness of the positive electrode active material layer applied on one side of the positive electrode current collector. In the technical solution of the embodiments of this application, the single-sided thickness of the positive electrode active material is set within the foregoing range to shorten the ion conduction path, so that the battery has high energy density.

In some embodiments, a porosity of the positive electrode active material layer is 1% to 70%, and optionally, the porosity is 8% to 50%. For example, the porosity of the positive electrode active material layer may be a typical but non-limiting porosity such as 1%, 2%, 3%, 4%, 5%, 6%, 7%, 8%, 9%, 10%, 14%, 18%, 20%, 22%, 25%, 29%, 30%, 33%, 35%, 39%, 43%, 46%, 50%, 52%, 56%, 58%, 60%, 64%, 68%, or 70%, or within a range defined by any two porosities.

The detection test of the porosity of the positive electrode plate is made using a true density meter (device model: AccuPycII1340) in accordance with GB/T 24586-2009. The test principle is as follows: A replacement method of inert gas (helium) with a small molecular diameter, combined with Archimedes' principle and Boyle's law (PV=nRT), is used to precisely measure the true volume of the tested material, so as to obtain the porosity of the sample to be tested. The calculation formulas are as follows: apparent volume V2=S×H×A and porosity α=(V2-V1)/V2×100%, where S represents the sample area in cm²; H represents the sample thickness in cm; A represents the number of samples in EA; V1 represents the true volume of the sample in cm³; V2 represents the apparent volume of the sample in cm³; and α represents the porosity of the sample in %.

In the technical solution of the embodiments of this application, the porosity of the positive electrode active material layer is set within the foregoing range. A smaller porosity results in a smaller contact area and interaction interface between the transition metal oxide of the positive electrode active material and the electrolyte, reducing side reactions and gas generated, and enabling the battery to have good capacity and cycle life.

In some embodiments, a specific surface area BET of the transition metal oxide in the positive electrode active material layer satisfies 0.2 m²/g≤BET≤1.5 m²/g, and optionally 0.4 m²/g≤BET≤1.2 m²/g. For example, the specific surface area BET of the transition metal oxide may be a typical but non-limiting specific surface area such as 0.2 m²/g, 0.3 m²/g, 0.4 m²/g, 0.5 m²/g, 0.6 m²/g, 0.7 m²/g, 0.8 m²/g, 0.9 m²/g, 1.0 m²/g, 1.1 m²/g, 1.2 m²/g, 1.3 m²/g, 1.4 m²/g, or 1.5 m²/g, or within a range defined by any two specific surface areas.

The specific surface area BET is a total area per unit mass of the material. The specific surface area BET has a meaning well known in the art and can be measured by using an instrument and a method well known in the art. For example, the specific surface area can be measured in accordance with the GB/T 19587-2017 standard.

In the technical solution of the embodiments of this application, a smaller specific surface area BET of the material tends to indicate a smaller contact area and interaction interface with the electrolyte, reducing gas generated. However, if the specific surface area BET is too small, the structure has insufficient stability and is prone to collapse and breakage, increasing side reactions. Therefore, the specific surface area of the transition metal oxide in the positive electrode active material layer is set to satisfy the foregoing range, so that the battery has less gas generated and fewer side reactions while maintaining the structural stability of the positive electrode active material.

In some embodiments, a median particle size of the transition metal oxide satisfies 2 µm≤D_{V}50≤12 µm, and optionally 3 µm≤D_{V}50≤10 µm. For example, the median particle size D_{V}50 of the transition metal oxide may be a typical but non-limiting particle size such as 2 µm, 2.5 µm, 3 µm, 3.5 µm, 4 µm, 4.5 µm, 5 µm, 5.5 µm, 5.8 µm, 6 µm, 6.5 µm, 7 µm, 7.5 µm, 8 µm, 8.5 µm, 9 µm, 9.5 µm, 10 µm, 10.5 µm, 11 µm, 11.5 µm, or 12 µm, or within a range defined by any two particle sizes.

D_{V}50, also referred to as median diameter or median particle size, means that 50% of the particles in a particle group have a particle size smaller than this value and 50% of the particles have a particle size larger than this value. The median particle size D_{V}50 has a meaning well known in the art and can be measured by using an instrument and a method well known in the art. For example, the median particle size D_{V}50 can be measured by using the particle size distribution laser diffraction method in accordance with the GB/T 19077-2016 standard.

In the technical solution of the embodiments of this application, a larger particle size of the material tends to indicate a smaller contact area and interaction interface with the electrolyte, reducing gas generated. However, if the particle size is too large, the material is prone to breakage and has insufficient structural stability. Therefore, the median particle size of the transition metal oxide is set to satisfy the foregoing range, so that the battery has less gas generated while maintaining the structural stability of the positive electrode active material.

In some embodiments, the battery cell 20 further includes an electrolyte, where a conductivity of the electrolyte is 5 mS/cm to 18 mS/cm, and optionally, the conductivity is 6 mS/cm to 12 mS/cm. For example, the conductivity of the electrolyte may be a typical but non-limiting conductivity such as 5 mS/cm, 6 mS/cm, 7 mS/cm, 8 mS/cm, 9 mS/cm, 10 mS/cm, 11 mS/cm, 12 mS/cm, 13 mS/cm, 14 mS/cm, 15 mS/cm, 16 mS/cm, 17 mS/cm, or 18 mS/cm, or within a range defined by any two conductivities.

The electrolyte includes an electrolytic sodium salt and a solvent. The electrolytic sodium salt may be an inorganic sodium salt, including at least one of sodium perchlorate, sodium tetrafluoroborate, sodium hexafluoroarsenate, and sodium hexafluorophosphate; or may be an organic sodium salt, including at least one of sodium bis(oxalato)borate, sodium difluoro(oxalato)borate, sodium bis(fluorosulfonyl)imide, and sodium bis(trifluoromethanesulfonyl)imide.

The solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, ethylene carbonate, propylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, diethyl sulfone, 1,3-dioxolane, tetrahydrofuran, dimethoxyethane, and acetonitrile.

In the technical solution of the embodiments of this application, the ester electrolyte has low volatility and good solubility and stability, and thus can provide good ion conductivity for the electrolyte. The conductivity of the electrolyte being set within the foregoing range can improve the efficiency and energy density of the battery, better ensuring the stability and safety of the battery.

In some embodiments, a solute concentration of the electrolyte is 0.7 mol/L to 1.2 mol/L, and optionally, the solute concentration is 0.85 mol/L to 1.1 mol/L. For example, the solute concentration of the electrolyte may be a typical but non-limiting concentration such as 0.7 mol/L, 0.72 mol/L, 0.77 mol/L, 0.79 mol/L, 0.81 mol/L, 0.82 mol/L, 0.85 mol/L, 0.89 mol/L, 0.90 mol/L, 0.92 mol/L, 0.96 mol/L, 1.0 mol/L, 1.1 mol/L, or 1.2 mol/L, or within a range defined by any two concentrations.

The solute concentration is also a concentration of the sodium salt. The solute concentration of the electrolyte is set within the foregoing range, so that the battery has good charge and discharge efficiency, better ensuring the stability and safety of the battery.

In some embodiments, a residual space coefficient of the battery cell is 0.02 mL/Ah to 1 mL/Ah, and optionally 0.2 mL/Ah to 0.8 mL/Ah. For example, the residual space coefficient of the battery cell may be a typical but non-limiting residual space coefficient such as 0.02 mL/Ah, 0.03 mL/Ah, 0.04 mL/Ah, 0.05 mL/Ah, 0.06 mL/Ah, 0.07 mL/Ah, 0.08 mL/Ah, 0.09 mL/Ah, 0.1 mL/Ah, 0.2 mL/Ah, 0.3 mL/Ah, 0.4 mL/Ah, 0.5 mL/Ah, 0.6 mL/Ah, 0.7 mL/Ah, 0.8 mL/Ah, 0.9 mL/Ah, or 1 mL/Ah, or within a range defined by any two residual space coefficients.

The residual space coefficient of the battery cell 20 is a ratio of a residual volume to a rated capacity of the battery cell. The residual volume may be a remaining volume with all solid and liquid components (including positive electrode plates, negative electrode plates, separators, mechanical components, and electrolyte) removed from the battery cell 20. The residual volume may be calculated by injecting a liquid to fill the residual space with the housing remaining undeformed, or measured by using the laser scanning method, the nuclear magnetic resonance technology, or the like. For example, after the battery cell 20 is finished, the electrolyte is injected into the shell until the entire accommodating cavity is filled, and the residual volume is the volume of the electrolyte subsequently injected.

In the technical solution of the embodiments of this application, the residual space coefficient of the battery cell is set within the foregoing range, so that the battery cell has a certain gas accommodating space inside, and excess gas can be discharged to the outside of the battery cell through the venting means, thereby improving the safety of the battery.

In some embodiments, a gas permeation rate of the gas-permeable film 240 is 0.1 mL/D to 5 mL/D, optionally 0.2 mL/D to 4 mL/D, and more optionally 0.2 mL/D to 0.7 mL/D. For example, the gas permeation rate of the gas-permeable film 240 may be a typical but non-limiting gas permeation rate such as 0.1 mL/D, 0.15 mL/D, 0.2 mL/D, 0.3 mL/D, 0.4 mL/D, 0.5 mL/D, 0.6 mL/D, 0.7 mL/D, 0.8 mL/D, 0.9 mL/D, 1.0 mL/D, 1.5 mL/D, 2 mL/D, 2.5 mL/D, 3 mL/D, 3.5 mL/D, 4 mL/D, 4.5 mL/D, or 5 mL/D, or within a range defined by any two gas permeation rates. The gas permeation rate of the gas-permeable film is set within the foregoing range, so that excess gas generated inside the battery cell can be discharged to the outside of the battery cell through the gas-permeable film.

For the test method of the gas permeation rate, reference may be made to GB/T 1038-2000.

In some embodiments, a gas permeation rate v of the gas-permeable film 240 and a gas generation rate V inside the battery cell 20 satisfy 0.9≤v/V≤5, and optionally 1≤v/V≤4. For example, the ratio of the gas permeation rate v of the gas-permeable film 240 to the gas generation rate V inside the battery cell 20 may be a typical but non-limiting ratio such as 0.9, 0.95, 1, 1.2, 1.5, 1.6, 1.8, 2, 2.2, 2.5, 2.8, 2.9, 3, 3.2, 3.5, 3.6, 3.8, 4, 4.6, or 5, or within a range defined by any two ratios. The ratio of the gas permeation rate v of the gas-permeable film to the gas generation rate V inside the battery cell satisfies the foregoing relationship, so that the gas-permeable film has an appropriate gas permeation effect, allowing gas generated inside the battery cell to be promptly discharged from the gas-permeable film. When the ratio is too small, the gas-permeable film has a poor gas permeation effect. When the ratio is too large, the gas-permeable film is prone to infiltration of moisture from the air, deteriorating the service life.

The test method of the gas generation rate is as follows: An infrared flowmeter device is used, and the liquid injection hole of the battery cell is welded to a gas generation nail and connected to the flowmeter through a hose. The electrode assembly is subjected to cycling at 1C/1C within a 100% DOD range, the amount of generated gas measured by the flowmeter within 100 cycles is monitored, and the rate v is calculated in mL/D.

In some embodiments, a stoichiometric ratio z of the element Mn in the transition metal oxide Naₚ(NiₓFe_{y}Mn_{z}Me_{q})O₂ and a gas permeation rate v of the gas-permeable film satisfy 0.1≤z/v≤2, and optionally 0.25≤z/v≤1.7. For example, the ratio of the stoichiometric ratio z of the element Mn in the transition metal oxide Naₚ(NiₓFe_{y}Mn_{z}Me_{q})O₂ to the gas permeation rate v of the gas-permeable film is 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.5, 1.7, or 2.

In the technical solution of the embodiments of this application, due to the Jahn-Teller effect of the element Mn, accompanied by element valence change and bulk phase distortion, the element Mn tends to be released from the lattice and deposit onto the negative electrode, catalyzing the decomposition of the solid electrolyte interface (SEI) and generating gas. A larger stoichiometric ratio z of the element Mn indicates a greater gas generation rate and a greater required gas permeation rate v of the gas-permeable film. The stoichiometric ratio of the element Mn in the transition metal oxide and the gas permeation rate v of the gas-permeable film satisfy the foregoing relationship, so that the gas permeation rate of the gas-permeable film can match the gas generation rate affected by the element Mn, and the battery cell has an appropriate gas permeation effect. When the ratio is too large, the gas-permeable film of the battery cell has an insufficient gas permeation rate and poor effect. When the ratio is too small, the gas-permeable film is prone to infiltration of moisture from the air, deteriorating the service life.

In the embodiments of this application, an inductively coupled plasma spectrometer (ICP) can be used to test and detect element compositions and mass percentages thereof in the positive electrode active material transition metal oxide AMOₛ. After non-M elements are excluded, the molar ratio of each element M is determined based on the molar mass of each element M, and the chemical formula is calculated accordingly to obtain the stoichiometric ratio z of the element Mn.

Referring to FIG. 3, in some embodiments, the outer package 26 is further provided with an explosion-proof valve 21b.

In some embodiments, the explosion-proof valve 21b is provided on the end cover 21.

In the technical solution of the embodiments of this application, the explosion-proof valve 21b is provided on the end cover 21. The provided explosion-proof valve 21b can promptly open when the internal pressure of the battery cell is too high, so as to release the pressure inside the battery cell, preventing the battery from exploding during thermal runaway.

### Example 1

This example provides a battery cell, including an electrode assembly 23 and an outer package 26. The electrode assembly 23 includes a positive electrode plate, the positive electrode plate is provided with a positive electrode active material layer, and the positive electrode active material layer includes a transition metal layered oxide. The transition metal layered oxide is Na_{0.9}(Ni_{0.3}Fe_{0.3}Mn_{0.3}Ca_{0.1})O₂. The positive electrode plate may include a positive electrode current collector and positive electrode active material layers applied on two opposite sides of the positive electrode current collector. The single-sided thickness of the positive electrode active material layer on the positive electrode plate was 65 µm. The porosity of the positive electrode active material layer was 10%. The specific surface area BET in the positive electrode active material layer was 0.53 m²/g. The median particle size D_{V}50 of the transition metal layered oxide was 5.8 µm.

### Preparation of positive electrode slurry:

The transition metal layered oxide Na_{0.9}(Ni_{0.3}Fe_{0.3}Mn_{0.3}Ca_{0.1})O₂, binder, and conductive carbon were mixed at mass percentages of 94%, 2.5%, and 3.5%, then stirring solvent NMP was added, and the mixture was stirred to produce a positive electrode slurry. The mass ratio of the added stirring solvent NMP to the fixed mixture was 4:6. The binder was PVDF.

### Preparation of negative electrode slurry:

Hard carbon, binder, thickener, and conductive carbon were mixed at mass percentages of 94%, 4%, 1%, and 1%, then stirring solvent NMP was added, and the mixture was stirred to produce a negative electrode slurry. The mass ratio of the added stirring solvent NMP to the fixed mixture was 5:5.

The battery cell 20 further includes an electrolyte. The electrolyte was an ethylene carbonate solvent and a fluorinated carbonate additive. The conductivity of the electrolyte was 8.4 mS/cm. The sodium salt concentration of the electrolyte was 0.9 mol/L. The residual space coefficient of the battery cell was 0.4 mL/Ah.

Then, coating, cold pressing, die cutting, winding, assembly, electrolyte injection, aging, and formation were performed in sequence to obtain the electrode assembly.

A venting means 24 is installed on the end cover 21 of the battery cell. Referring to FIGs. 4 and 5, the venting means 24 includes a metal aluminum sheet and a gas-permeable film 240. The gas-permeable film 240 is sealingly fused on a side of the metal aluminum sheet facing toward the interior of the battery cell. The metal aluminum sheet is provided with 7 through holes 241. The through holes 241 are small circular holes. The hole diameter of each through hole was 2 mm, and the total area of the through holes was 21.98 mm². The thickness of the gas-permeable film 240 was 0.4 mm.

As shown in FIG. 6, the venting means 24 is installed on a side of the end cover 21 facing toward the interior of the battery cell 20. An accommodating recess for accommodating the venting means 24 is provided on the side of the end cover 21 facing toward the interior of the battery cell 20. An insulating member 25 is provided with a gas permeation hole 251. A venting hole 211 is provided on an outer side of the end cover 21. Gas inside the battery cell 20 is discharged to the outside of the battery cell 20 through the gas permeation hole 251, the gas-permeable film 240 of the venting means 24, the through hole 241, and the venting hole 211. After the venting means 24 is installed into the accommodating recess of the end cover 21, a gas guide channel 212 may be formed between the through hole 241 and the venting hole 211. An orthographic projection area of the gas permeation hole 251 of the insulating member 25 is not less than orthographic projection areas of all the through holes 241. The venting hole 211 and the through hole 241 are staggered. Then, the battery cell is assembled.

Examples 2 to 5 are shown in Table 1 below. In Examples 2, 4, and 5, the battery cells were manufactured in the same manner as in Example 1, except that the gas permeation rate of the gas-permeable film was adjusted. In Example 3, the battery cell was manufactured in the same manner as in Example 1, except that the stoichiometric ratio of the element Mn in the transition metal oxide and the gas permeation rate of the gas-permeable film were adjusted. In Comparative Example 1, the battery cell was manufactured in the same manner as in Example 1, except that the gas permeation rate of the gas-permeable film was adjusted. In Comparative Example 2, the battery cell was manufactured in the same manner as in Example 1, except that the stoichiometric ratio of the element Mn in the transition metal oxide and the gas permeation rate of the gas-permeable film were adjusted. In Comparative Example 3, no gas-permeable film was provided.

**Table 1 Relevant parameter results of battery cells in Examples 1 to 5 and Comparative Examples 1 to 3**

| | Transition metal layered oxide | Stoichiometric ratio of element Mn (z) | Gas permeation rate (v, mL/D) | z/v | v/V |
|---|---|---|---|---|---|
| Example 1 | Na_{0.9}(Ni_{0.3}Fe_{0.3}Mn_{0.3}Ca_{0.1})O₂ | 0.30 | 0.15 | 2 | 0.9 |
| Example 2 | Na_{0.9}(Ni_{0.3}Fe_{0.3}Mn_{0.3}Ca_{0.1})O₂ | 0.30 | 0.18 | 1.7 | 1 |
| Example 3 | Na_{0.9}(Ni_{0.3}Fe_{0.3}Mn_{0.35}Ca_{0.05})O₂ | 0.35 | 0.3 | 1.17 | 2.5 |
| Example 4 | Na_{0.9}(Ni_{0.3}Fe_{0.3}Mn_{0.3}Ca_{0.1})O₂ | 0.30 | 3 | 0.1 | 5 |
| Example 5 | Na_{0.9}(Ni_{0.3}Fe_{0.3}Mn_{0.3}Ca_{0.1})O₂ | 0.30 | 1.2 | 0.25 | 4 |
| Comparative Example 1 | Na_{0.9}(Ni_{0.3}Fe_{0.3}Mn_{0.3}Ca_{0.1})O₂ | 0.30 | 8 | 0.0375 | 6.6 |
| Comparative Example 2 | Na_{0.9}(Ni_{0.3}Fe_{0.3}Mn_{0.35}Ca_{0.05})O₂ | 0.35 | 0.08 | 4.38 | 0.1 |
| Comparative Example 3 | Na_{0.9}(Ni_{0.3}Fe_{0.3}Mn_{0.3}Ca_{0.1})O₂ | 0.3 | \ | \ | \ |

### Performance test:

(1) Cycle rate test: Cycling was performed at normal pressure and 25±2°C according to the following procedure:
The battery was charged to 100% SOC at 0.33C and then to 0.05C at CV (constant voltage of 4.2 V); and discharged at 0.5C. The number of cycles and internal pressure of the battery cell were recorded when 85% SOH was reached.
(2) Test for maximum internal pressure at cycle termination: A pressure gauge was connected when the battery cell was manufactured, the pressure gauge was connected to a pressure receiving sensor to monitor the internal pressure of the battery cell, and the maximum internal pressure of the battery cell at cycle termination was recorded. The test results are shown in Table 2 below.

**Table 2 Performance results of battery cells in Examples 1 to 5 and Comparative Examples 1 to 3**

| | Cycles to 85% SOH | Internal pressure (MPa) |
|---|---|---|
| Example 1 | 1018 | 0.26 |
| Example 2 | 1026 | 0.17 |
| Example 3 | 1084 | 0.12 |
| Example 4 | 1013 | 0.08 |
| Example 5 | 1035 | 0.11 |
| Comparative Example 1 | 468 | 0.05 |
| Comparative Example 2 | 972 | 0.3 |
| Comparative Example 3 | 889 | 0.61 |

It can be seen from the foregoing results that compared with Comparative Example 3 in which no gas-permeable film is provided, in Examples 1 to 5, with the gas-permeable film provided, the cycling performance of the battery cell is significantly improved, and the internal pressure of the battery cell is not too high, thereby enhancing the reliability of the battery. In Comparative Example 3, no gas-permeable film is provided, so the internal pressure of the battery cell is too high, and the explosion-proof valve is prone to abnormal opening.

Compared with Comparative Examples 1 and 2 in which the ratio of the gas permeation rate of the gas-permeable film to the gas generation rate of the battery cell is not within an appropriate range, and the stoichiometric ratio of the element Mn and the gas permeation rate of the gas-permeable film are not within appropriate ranges, in Examples 1 to 5, the stoichiometric ratio of the element Mn and the gas permeation rate of the gas-permeable film are set within appropriate ranges, and the ratio of the gas permeation rate of the gas-permeable film to the gas generation rate of the battery cell is set within an appropriate range, so the cycling performance of the battery cell is significantly improved, and the internal pressure of the battery cell is not too high, thereby enhancing the reliability of the battery. In Comparative Example 1, z/v is too small, so the gas-permeable film is prone to infiltration of moisture from the air, severely deteriorating the service life of the battery cell in Comparative Example 1. In Comparative Example 2, z/v is too large, so the gas-permeable film has poor gas permeation rate, and the internal pressure of the battery cell increases relatively.

The foregoing descriptions are merely preferred embodiments of this application, but are not intended to limit this application. Any modification, equivalent replacement, or improvement made without departing from the spirit and principle of this application shall fall within the protection scope of this application.

## Claims

1. A battery cell, **characterized in that** the battery cell comprises:
an electrode assembly, wherein the electrode assembly comprises a positive electrode plate, the positive electrode plate is provided with a positive electrode active material layer, and the positive electrode active material layer comprises a transition metal oxide; and
an outer package, wherein the outer package is configured to package the electrode assembly, the outer package is provided with a venting means, and the venting means comprises a gas-permeable film.

2. The battery cell according to claim 1, **characterized in that** the venting means further comprises a connecting member, wherein the connecting member is provided with at least one through hole, the gas-permeable film is disposed on a side of the connecting member facing toward the interior of the battery cell, and the gas-permeable film covers all the through holes.

3. The battery cell according to claim 2, **characterized in that** the gas-permeable film is sealingly connected to a contact surface of the connecting member.

4. The battery cell according to claim 2 or 3, **characterized in that** the connecting member is provided with a plurality of through holes, wherein a hole diameter of each through hole is less than or equal to 3 mm.

5. The battery cell according to any one of claims 2 to 4, **characterized in that** in an axial direction of the through holes, all the through holes have an orthographic projection area of 10 mm² to 50 mm².

6. The battery cell according to any one of claims 1 to 5, **characterized in that** a thickness of the gas-permeable film is 0.1 mm to 3 mm, and optionally, the thickness is 0.2 mm to 0.8 mm.

7. The battery cell according to any one of claims 2 to 6, **characterized in that** the venting means further comprises a backing member, wherein the backing member is disposed between the connecting member and the gas-permeable film, the gas-permeable film covers the backing member, and the backing member covers all the through holes.

8. The battery cell according to claim 7, **characterized in that** a recess is provided on the side of the connecting member facing toward the interior of the battery cell, wherein the recess is configured to accommodate the gas-permeable film and/or the backing member.

9. The battery cell according to claim 7 or 8, **characterized in that** the backing member has a greater gas permeability than the gas-permeable film.

10. The battery cell according to any one of claims 7 to 9, **characterized in that** the backing member has a higher melting point than the gas-permeable film.

11. The battery cell according to any one of claims 7 to 10, **characterized in that** a gas-permeable area of the backing member is 50 mm² to 200 mm².

12. The battery cell according to any one of claims 2 to 11, **characterized in that** the outer package comprises an end cover, wherein the venting means is disposed on a side of the end cover facing toward the interior of the battery cell, and the end cover is provided with a venting hole communicating with the through hole of the venting means.

13. The battery cell according to claim 12, **characterized in that** an accommodating recess for accommodating the venting means is provided on the side of the end cover facing toward the interior of the battery cell, wherein when the venting means is installed into the accommodating recess, a gas guide channel is provided above the through hole of the venting means, the through hole communicates with the venting hole through the gas guide channel, and the venting hole and the through hole are staggered.

14. The battery cell according to claim 13, **characterized in that** an insulating member is provided on an inner side of the end cover, wherein the insulating member is provided with a gas permeation hole, and gas inside the battery cell is discharged to the outside of the battery cell through the gas permeation hole, the venting means, the gas guide channel, and the venting hole.

15. The battery cell according to claim 14, **characterized in that** in a thickness direction of the end cover, an orthographic projection of the gas permeation hole covers orthographic projections of all the through holes.

16. The battery cell according to any one of claims 1 to 15, **characterized in that** a chemical formula of the transition metal oxide is AMOₛ, wherein 1≤s≤2, the element A comprises at least one of Li, Na, K, or Mg, and the element M comprises a transition metal element.

17. The battery cell according to any one of claims 1 to 16, **characterized in that** the transition metal oxide is Naₚ(NiₓFe_{y}Mn_{z}Me_{q})O₂, wherein the element Me comprises any one or more of Zn, Ti, Zr, Mg, La, Y, Co, Cr, Al, K, V, Mo, W, Sr, Ta, Nb, or Ca, 0.8≤p<1, 0.01≤x<0.35, 0.01≤y<0.35, 0.01≤z<0.5, 0.01≤q<0.3, and 0.81≤x+y+z<1.

18. The battery cell according to any one of claims 1 to 17, **characterized in that** a single-sided thickness of the positive electrode active material layer is 50 µm to 150 µm, and optionally, the single-sided thickness is 55 µm to 130 µm.

19. The battery cell according to any one of claims 1 to 18, **characterized in that** a porosity of the positive electrode active material layer is 1% to 70%, and optionally, the porosity is 8% to 50%.

20. The battery cell according to any one of claims 1 to 19, **characterized in that** a specific surface area BET of the transition metal oxide in the positive electrode active material layer satisfies 0.2 m²/g≤BET≤1.5 m²/g, and optionally 0.4 m²/g≤BET≤1.2 m²/g.

21. The battery cell according to any one of claims 1 to 20, **characterized in that** a median particle size of the transition metal oxide satisfies 2 µm≤D_{V}50≤12 µm, and optionally 3 µm≤D_{V}50≤10 µm.

22. The battery cell according to any one of claims 1 to 21, **characterized in that** the battery cell further comprises an electrolyte, wherein a conductivity of the electrolyte is 5 mS/cm to 18 mS/cm, and optionally, the conductivity is 6 mS/cm to 12 mS/cm.

23. The battery cell according to claim 22, **characterized in that** a solute concentration of the electrolyte is 0.7 mol/L to 1.2 mol/L, and optionally, the solute concentration is 0.85 mol/L to 1.1 mol/L.

24. The battery cell according to any one of claims 1 to 23, **characterized in that** a residual space coefficient of the battery cell is 0.02 mL/Ah to 1 mL/Ah, and optionally 0.2 mL/Ah to 0.8 mL/Ah.

25. The battery cell according to any one of claims 1 to 24, **characterized in that** a gas permeation rate of the gas-permeable film is 0.1 mL/D to 5 mL/D, optionally 0.2 mL/D to 4 mL/D, and more optionally 0.2 mL/D to 0.7 mL/D.

26. The battery cell according to any one of claims 1 to 25, wherein a gas permeation rate v of the gas-permeable film and a gas generation rate V inside the battery cell satisfy 0.9≤v/V≤5, and optionally 1≤v/V≤4.

27. The battery cell according to any one of claims 17 to 26, **characterized in that** a stoichiometric ratio z of the element Mn in the transition metal oxide Naₚ(NiₓFe_{y}Mn_{z}Me_{q})O₂ and a gas permeation rate v of the gas-permeable film satisfy 0.1≤z/v≤2, and optionally 0.25≤z/v≤1.7.

28. The battery cell according to any one of claims 1 to 27, **characterized in that** the outer package is further provided with an explosion-proof valve.

29. A manufacturing method of battery cell, **characterized by** comprising:
providing an electrode assembly, wherein the electrode assembly comprises a positive electrode plate, the positive electrode plate is provided with a positive electrode active material layer, and the positive electrode active material layer comprises a transition metal oxide; and
providing an outer package, wherein the outer package is provided with a venting means, the outer package packages an outer side of the electrode assembly, and the venting means comprises a gas-permeable film.

30. A battery, **characterized in that** the battery comprises the battery cell according to any one of claims 1 to 28.

31. An electric apparatus, **characterized in that** the electric apparatus comprises the battery according to claim 30.
